# EUROPÄISCHE PATENTSCHRIFT

(11) **EP 3 697 600 B1**
(45) Veröffentlichungstag und Bekanntmachung des Hinweises auf die Patenterteilung: **09.09.2026**
(21) Anmeldenummer: 18740780.4
(22) Anmeldetag: 10.07.2018
(51) Int. Cl.: B29C 70/38, B25J 11/00, B25J 15/00

(54) **ENDEFFEKTOR**
END EFFECTOR
EFFECTEUR TERMINAL

(30) Priorität: 19.10.2017 DE 202017106345 U
(43) Veröffentlichungstag der Anmeldung: 26.08.2020
(73) Patentinhaber: Broetje-Automation GmbH, 26180 Rastede (DE)
(72) Erfinder: LOHSE, Philipp, 79639 Grenzach-Wyhlen (DE); BEKAREW, Eugen, 79639 Grenzach-Wyhlen (DE); MOEBEL, Philippe, 68730 Blotzheim (FR); MEYER, Matthias, 79576 Weil am Rhein (DE)
(74) Vertreter: Gottschald Patentanwälte Partnerschaft mbB
(86) Internationale Anmeldenummer: PCT/EP2018/068652
(87) Internationale Veröffentlichungsnummer: WO 2019/076498

(56) Entgegenhaltungen:
- EP-A1- 2 772 348

## Beschreibung

Die Erfindung betrifft einen Endeffektor zum Ablegen von Fasern auf einer Ablageform gemäß Anspruch 1 sowie einen Manipulator gemäß Anspruch 16

Endeffektoren zum Ablegen von Fasern auf Ablageformen sind aus dem Stand der Technik in verschiedenen Ausgestaltungen bekannt. Zumeist sind diese an einem Manipulator, insbesondere einem Industrieroboter oder einem Portalroboter, angeordnet. Diese Endeffektoren weisen in der Regel eine Vielzahl von Spulen auf, von denen Fasern, bspw. Glasfasern und/oder Kohlefasern, umfassende Faserstränge über eine Vielzahl von Umlenkrollen einer Andruckrolle zugeführt werden. Dabei können diese Umlenkrollen beispielsweise entlang der Längsachse gesehen zwischen den Spulen und der Andruckrolle vorgesehen sein. Da hier ein Großteil der Umlenkungen der Faserstränge zwischen den Spulen der Andrückrolle erfolgt und hierfür ein nicht unerheblicher Bauraum benötigt wird, sind diese Endeffektoren im Verhältnis zur Anzahl der verbauten Spulen relativ groß. Ein Endeffektor zum Ablegen von Fasern ist beispielsweise in der EP 2 772 348 A1 beschrieben.

Ferner ist es bekannt, Spulen paarweise übereinander am Endeffektor anzuordnen und die Faserstränge von diesen zwischen den paarweise angeordneten Spulen hindurch zur Andruckrolle zu führen. Dies sorgt mit zunehmender Spulenanzahl für eine sehr große Längserstreckung des Endeffektors.

Nachteilig an diesen bekannten Endeffektoren ist, dass diese sehr viel Bauraum benötigen, die Faserstrangführung häufig sehr komplex und das Gewicht des Endeffektors in der Folge hoch ist.

Der Erfindung liegt somit die Aufgabe zugrunde, einen vergleichsweise leichten und kompakten Endeffektor zum Ablegen von Fasern bereitzustellen.

Gelöst wird die Aufgabe durch einen Endeffektor mit den Merkmalen von Anspruch 1.

Der vorschlagsgemäße Endeffektor weist mindestens eine Spulenanordnung eines Systemtyps auf.

Dieser Systemtyp ist hier dadurch definiert, dass die Spulenanordnung eine erste Spule zum Bereitstellen eines ersten Faserstrangs und eine zweite Spule zum Bereitstellen eines zweiten Faserstrangs aufweist und dass die Rotationsachsen der ersten und der zweiten Spule winkelig zueinander angeordnet sind.

Dadurch, dass der erste Faserstrang und der zweite Faserstrang über eine Umlenkeinheit zusammengeführt und von einem Eckbereich des Endeffektors gemeinsam in einen Mittenbereich des Endeffektors und weiter zu einer Andruckrolle geführt werden, kann ein ganz besonders kompakter Aufbau des Endeffektors erreicht werden. Zudem kann dieser kompakte Aufbau sehr gut durch das Vorsehen weiterer Spulen am Endeffektor skaliert werden. Außerdem kann die Faserstrangführung erheblich vereinfacht werden, da viel weniger Umlenkungen der Faserstränge nötig sind. Schließlich ermöglicht der vergleichsweise kompakte Aufbau auch ein besonders geringes Gewicht des Endeffektors.

In der Weiterbildung gemäß Anspruch 2 wird vorgeschlagen, eine zweite Spulenanordnung des Systemtyps vorzusehen. Dies ermöglicht einen besonders symmetrischen Aufbau des Endeffektors, wodurch die Trägheit desselben bei Bewegungen durch den Manipulator verringert und damit die Platzierungsgenauigkeit der Fasern auf einer Ablageform gesteigert wird.

Die Ansprüche 3 und 4 beschreiben eine bevorzugte Anordnung der Andruckrolle in Relation zu dem Endeffektor. Durch eine solche Anordnung kann die Kompaktheit des Endeffektors und die Einfachheit der Führung der Faserstränge zur Andruckrolle weiter gesteigert werden.

Gemäß Anspruch 5 können weitere Spulenanordnungen am Endeffektor vorgesehen sein, deren Spulen beispielsweise wie im Anspruch 6 beschrieben angeordnet sein können. Dies ermöglicht eine besonders kompakte Anordnung auch einer größeren Spulenanzahl. Gemäß Anspruch 7 bilden die Seiten des Endeffektors im Querschnitt vorzugsweise ein Vieleck und im Anspruch 8 sind bevorzugte symmetrische Anordnungen der Spulen zueinander beschrieben. Diese ermöglichen einen sich wiederholenden sehr kompakten Aufbau des Endeffektors.

Weitere bevorzugte Merkmale des Systemtyps sind in den Ansprüchen 9 und 10 beschrieben, welche eine bessere Faserstrangführung ermöglichen. Bevorzugte Merkmale der Faserstrangführung über die Umlenkeinheiten sind in den Ansprüchen 11 bis 15 beschrieben.

Darüber hinaus wird die beschriebene Aufgabe mit einem Manipulator gemäß Anspruch 16 gelöst.

Es ergeben sich die gleichen Vorteile wie vorstehend bereits in Zusammenhang mit dem Endeffektor beschrieben.

Nachfolgend wird die Erfindung anhand einer lediglich ein bevorzugtes Ausführungsbeispiel darstellenden Zeichnung näher erläutert. In der Zeichnung zeigt
- Fig. 1: einen vorschlagsgemäßen Manipulator mit einem vorschlagsgemäßen Endeffektor in einer schematischen Ansicht,
- Fig. 2: den Endeffektor in einer schematischen Ansicht von der Seite in der zum besseren Verständnis lediglich zwei Faserstränge von einer Spule zur Andruckrolle dargestellt sind,
- Fig. 3: eine Ansicht von unten entlang der Längsachse des Endeffektors auf diesen, wobei auch hier lediglich zwei Faserstränge schematisch dargestellt sind,
- Fig. 4: eine schematische Prinzipskizze der vorliegenden Erfindung in einer Ansicht analog zu der der Fig. 3,
- Fig. 5: eine dreidimensionale Ansicht einer Spuleneinheit des Endeffektors aus Fig. 2, in der die Führung des Faserstrangs innerhalb der Spuleneinheit dargestellt ist und
- Fig. 6: eine schematische Darstellung der Führung der Faserstränge der Spulen zu einer der Umlenkeinheiten und von dieser weiter in Richtung der Andruckrolle.

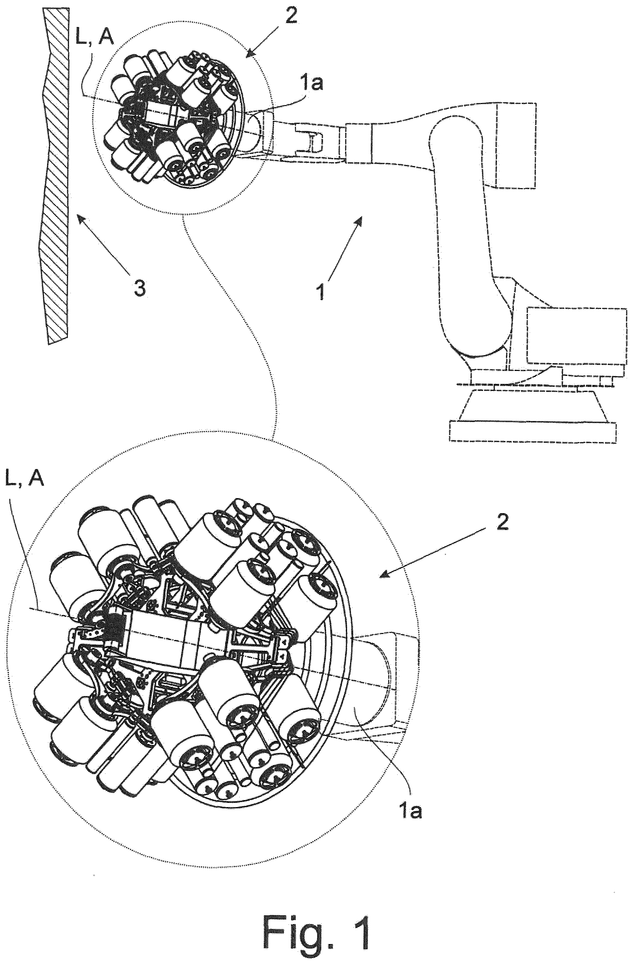

Die Fig. 1 zeigt einen vorschlagsgemäßen Manipulator 1 mit einem vorschlagsgemäßen Endeffektor 2 zum Ablegen von Fasern auf einer Ablageform 3.

Der Manipulator 1 ist vorzugsweise ein Roboter mit mindestens vier Bewegungsachsen. Im Ausführungsbeispiel weist der Manipulator 1 sechs Rotationsachsen auf. Es ist ein Knickarmroboter. Zusätzlich oder alternativ kann der Roboter jedoch auch als Portalroboter ausgebildet sein. Besonders bevorzugt weist der Roboter drei Handachsen auf. Das heißt, seine letzten drei Bewegungsachsen vor dem Manipulatorflansch 1a sind Rotationsachsen. Über den Manipulatorflansch 1a des Manipulators 1 wird der Endeffektor 2 vom Manipulator 1 gehalten und bewegt.

Der Endeffektor 2 weist vorschlagsgemäß mindestens eine Spulenanordnung 4 eines Systemtyps auf. Die Spulenanordnung 4 des Systemtyps ist dabei dadurch definiert, dass sie eine erste Spule 5, 5a zum Bereitstellen eines ersten Faserstrangs 6, 6a und eine zweite Spule 5, 5b zum Bereitstellen eines zweiten Faserstrangs 6, 6b aufweist. Dabei sind die Rotationsachsen R_{S1}, R_{S2} der ersten Spule 5a und der zweiten Spule 5b winkelig zueinander angeordnet.

Vorzugsweise beträgt der Winkel Ws zwischen der Rotationsachse R_{S1} der ersten Spule 5a und der Rotationsachse R_{S2} der zweiten Spule 5b, welcher eine Umlenkeinheit 7 einschließt, zwischen 20° und 160°, vorzugsweise zwischen 45° und 135°, weiter vorzugsweise im Wesentlichen 90°.

Dadurch, dass der erste Faserstrang 6a und der zweite Faserstrang 6b über eine Umlenkeinheit 7 zusammengeführt und von einem Eckbereich 8 des Endeffektors 2 gemeinsam in einen Mittenbereich 9 des Endeffektors 2 und weiter zu einer Andruckrolle 10 geführt werden, kann ein ganz besonders kompakter Aufbau des Endeffektors 2 und eine besonders einfache Faserstrangführung erreicht werden.

Diese besondere Kompaktheit wird bei dem vorschlagsgemäßen Endeffektor 2 durch das Zusammenführen der Faserstränge 6, 6a, 6b in einem Eckbereich 8, 8a, 8b mittels der in diesem angeordneten Umlenkeinheit 7 erreicht.

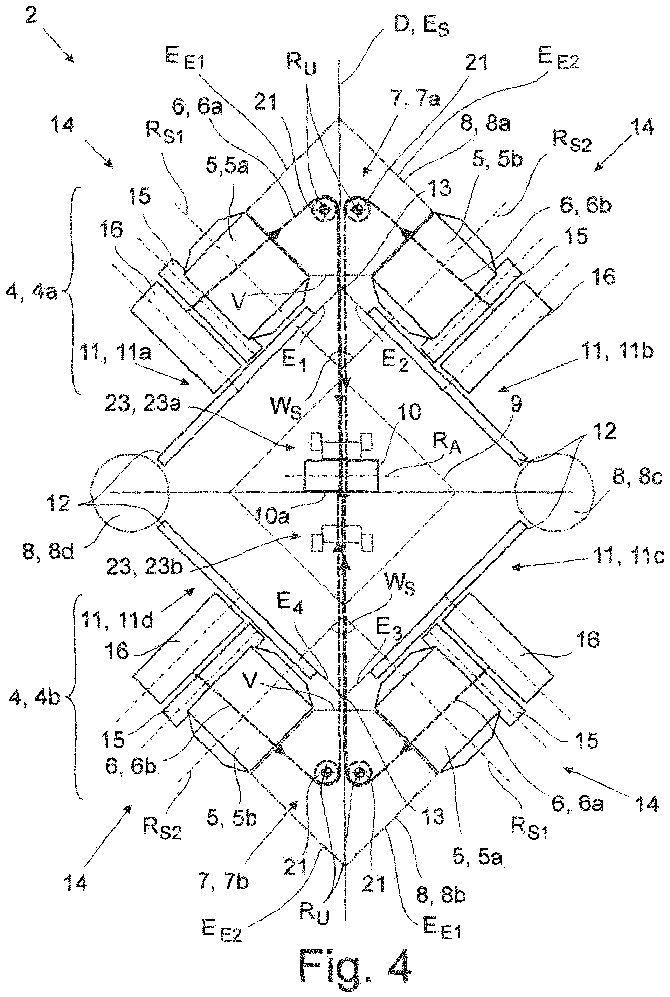

Dieses Prinzip wird schematisch in der Fig. 4 gezeigt, in der eine erste Spulenanordnung 4, 4a und eine zweite Spulenanordnung 4, 4b des Systemtyps gezeigt werden und anhand derer weitere bevorzugte Ausgestaltungen des Endeffektors 2 nachfolgend weiter erläutert werden.

Wie der Fig. 4 weiter zu entnehmen ist, werden hier und vorzugsweise die Faserstränge 6 von der ersten Spulenanordnung 4a über eine erste Umlenkeinheit 7, 7a zusammengeführt und von einem ersten Eckbereich 8, 8a des Endeffektors 2 gemeinsam in den Mittenbereich 9 des Endeffektors 2 und weiter zu der Andruckrolle 10 geführt. Die Faserstränge 6 von der zweiten Spulenanordnung 4b werden hier und vorzugsweise über eine zweite, insbesondere der ersten Umlenkeinheit 7a, insbesondere bezogen auf die Längsachse L des Endeffektors 2, gegenüberliegende, Umlenkeinheit 7b zusammengeführt und von einem zweiten, insbesondere dem ersten Eckbereich 8a, insbesondere bezogen auf die Längsachse L des Endeffektors 2, gegenüberliegenden, Eckbereich 8b des Endeffektors 2 gemeinsam in den Mittenbereich 9 des Endeffektors 2 und weiter zu der Andruckrolle 10 geführt. Durch diese Anordnung, bei der sich die Spulenanordnungen 4 am Endeffektor 2 gegenüberliegen, kann zum Einen die Kompaktheit des Endeffektors 2 bei einer höheren Anzahl von Spulen 5 gesteigert werden und zum Anderen ermöglicht ein solcher Aufbau dem Manipulator 1 ein besonders sicheres Ansteuern von Ablagepositionen für die Faserstränge 6, da das Trägheitsmoment des Endeffektors 2, insbesondere bei Rotationsbewegungen desselben, reduziert wird.

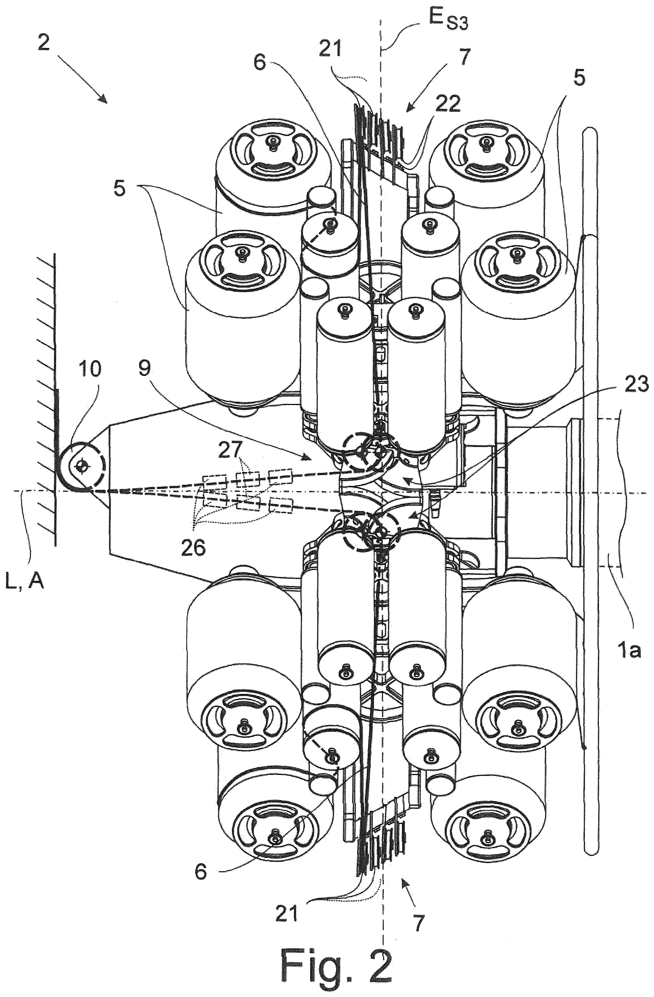

In der Fig. 2 ist die Längsachse L des Endeffektors 2 mit demselben gezeigt, entlang derer er sich erstreckt. Hier und vorzugsweise ist die Längsachse L koaxial zur letzten Bewegungsachse A des Manipulators 1 angeordnet. Zusätzlich oder alternativ kann die Längsachse L eine Mittenachse des Endeffektors 2 sein. Im Ausführungsbeispiel fallen diese zusammen. Bei dieser Achse wird im Allgemeinen auch von einer sogenannten "Centerline" gesprochen.

Wie der schematischen Darstellung der Fig. 4 entnommen werden kann, schneidet hier und vorzugsweise eine den ersten Eckbereich 8a und den zweiten Eckbereich 8b verbindende Diagonale D eine parallel zur Längsachse L gerichtete Projektion der Andruckrolle 10. Hierdurch wird ein ganz besonders einfaches Führen der Faserstränge 6 von den Spulen 5 zur Andruckrolle 10 ermöglicht. Dies gilt in besonderem Maße dann, wenn die Rotationsachse R_{A} der Andruckrolle 10 orthogonal zu der den ersten Eckbereich 8a und den zweiten Eckbereich 8b verbindenden Diagonalen D angeordnet ist. Abgesehen von der Rotationsachse R_{A} ist die Andrückrolle 10 hier und vorzugsweise drehfest zu der bzw. den Spulenanordnungen 4 am Endeffektor 2 angeordnet, insbesondere drehfest um eine Achse orthogonal zu ihrer Rotationsachse R_{A} und/oder parallel zur Längsachse L des Endeffektors 2.

Zusätzlich oder alternativ kann die Rotationsachse R_{A} der Andruckrolle 10 in einem Winkel ungleich 0° und/oder in einem Winkel ungleich 90° zu den Rotationsachsen R_{S1}, R_{S2} der Spulen 5 angeordnet sein. Das heißt, der die Rotationsachse R_{A} der Andruckrolle 10 ist nicht senkrecht und/oder nicht parallel zu den Rotationsachsen R_{S1}, R_{S2} der Spulen 5. Insbesondere bei einer solchen Anordnung der Rotationsachse R_{A} der Andruckrolle 10 zu den Rotationsachsen R_{S1}, R_{S2} der Spulen 5 kann durch die Umlenkeinheiten 7, 7a, 7b in den Eckbereichen 8, 8a, 8b des Endeffektors 2 eine besonders einfache Faserstrangführung zur Andruckrolle 10 realisiert werden. Besonders bevorzugt ist die Andruckrolle 10 derart zu den Spulen 5 angeordnet, dass die Rotationsachse R_{A} der Andruckrolle 10 in einem Winkel zwischen 15° und 75°, vorzugsweise zwischen 30° und 60°, hier 45°, zu den Rotationsachsen R_{S1}, R_{S2} der Spulen 5 angeordnet ist.

Ferner ist die Andruckrolle 10 hier derart angeordnet, dass die Längsachse L des Endeffektors 2 bzw. die "Centerline" an der Rotationsachse R_{A} der Andruckrolle 10 vorbeiführt, diese also nicht schneidet. Im Ausführungsbeispiel und vorzugsweise ist es so, dass die Längsachse L bzw. die "Centerline" die Abrollfläche 10a der Andruckrolle 10 tangential berührt.

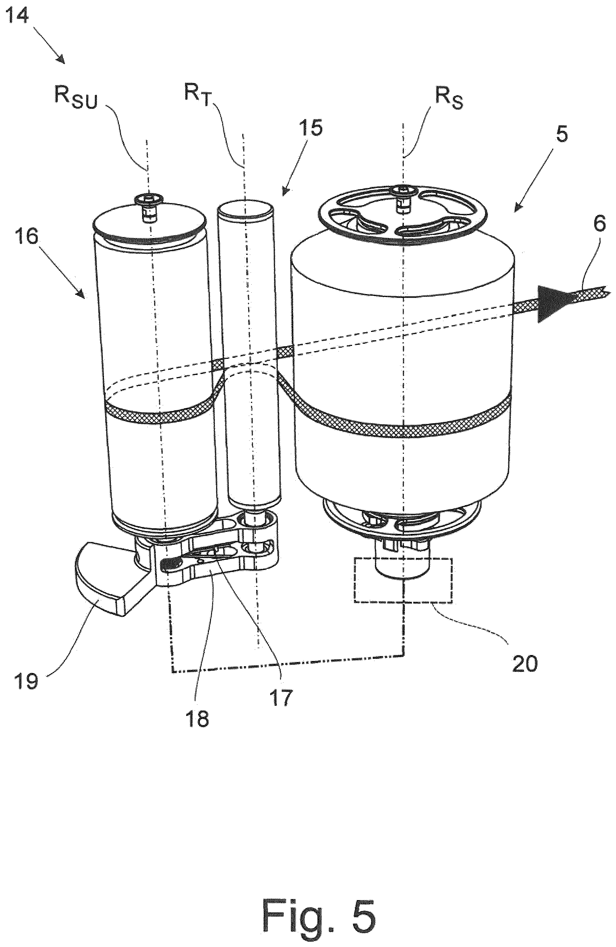

Die zu der Andruckrolle 10 geführten Faserstränge 6 können so besonders gut auf der Ablageform 10 abgelegt werden. Sie werden vom Endeffektor von den Spulen 5 abgerollt und der Andruckrolle 10 zugeführt. Die Ablage der Faserstränge 6 bzw. Fasern, insbesondere Kohlefasern und/oder Glasfasern, der Faserstränge 6 erfolgt hier und vorzugsweise als Band von Fasersträngen 6 über die Andruckrolle 10. Die Faserstränge 6 sind bevorzugt sogenannte Prepregs (vorimprägnierte Fasern). Hier sind sie, wie in der Fig. 5 dargestellt, als Bandmaterial ausgebildet.

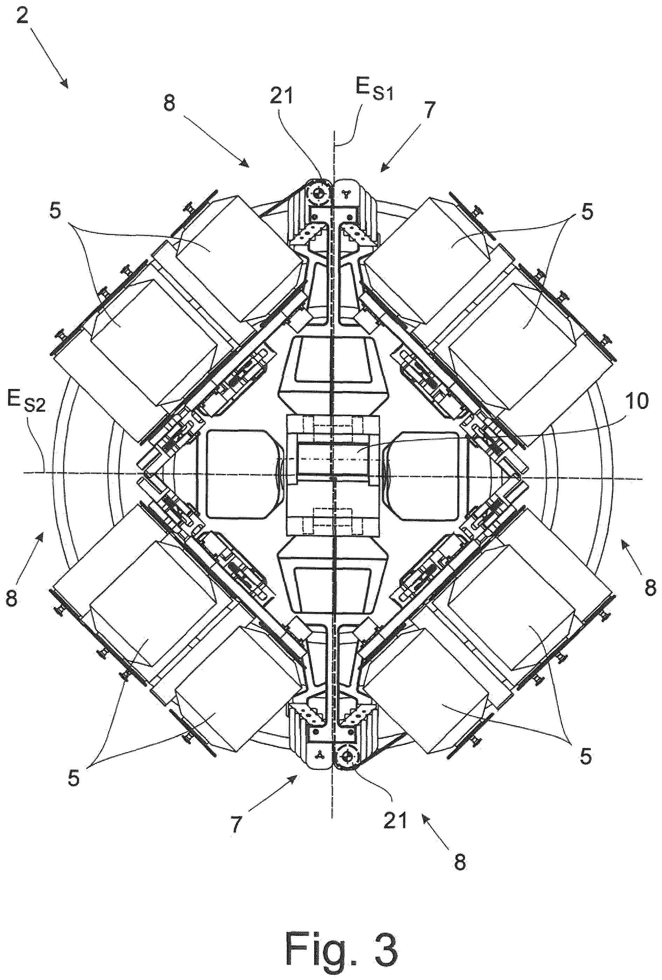

Wie den Figuren 2 und 3 zu entnehmen ist, weist hier und vorzugsweise der Endeffektor 2 eine oder mehrere weitere Spulenanordnungen 4, 4a, 4b des Systemtyps auf, deren Faserstränge 6, 6a, 6b jeweils über die erste Umlenkeinheit 7a oder die zweite Umlenkeinheit 7b in den Mittenbereich 8 des Endeffektors 2 geführt werden. Vorzugsweise weist der Endeffektor 2 mindestens vier, vorzugsweise mindestens sechs, weiter vorzugsweise mindestens acht, weiter vorzugsweise mindestens zwölf, weiter vorzugsweise mindestens sechzehn, Spulenanordnungen 4, 4a, 4b des Systemtyps auf. Im Ausführungsbeispiel weist der Endeffektor 2 insgesamt acht Spulenanordnungen 4 des Systemtyps auf. Dies entspricht sechszehn Spulen 5, 5a, 5b.

Wie der Fig. 3 zu entnehmen ist, weist der Endeffektor 2 hier und vorzugsweise vier Seiten 11, 11a, 11b, 11c, 11d auf, an denen die Spulen 5 der Spulenanordnungen 4, 4a, 4b angeordnet sind. Alternativ kann der Endeffektor 2 auch lediglich zwei Seiten 11, 11a, 11b aufweisen, an denen die Spulen 5 der Spulenanordnungen 4 angeordnet sind. Bevorzugt weist er jedoch mindestens zwei bzw. mindestens vier Seiten 11, 11a, 11b, 11c, 11d auf, an denen die Spulen 5 der Spulenanordnungen 4, 4a, 4b angeordnet sind.

Wie in der Fig. 3 gezeigt, sind an einer ersten Seite 11a von den Spulenanordnungen 4, 4a, deren Faserstränge 6, 6a zur ersten Umlenkeinheit 7a führen, die ersten Spulen 5, 5a angeordnet und an der zweiten Seite 11b von den Spulenanordnungen 4, 4a, deren Faserstränge 6, 6b zur ersten Umlenkeinheit 7a führen, die zweiten Spulen 5, 5b angeordnet. An der dritten Seite 11c sind von den Spulenanordnungen 4, 4b, deren Faserstränge 6, 6a zur zweiten Umlenkeinheit 7b führen, die ersten Spulen 5, 5a angeordnet und an der vierten Seite 11d von den Spulenanordnungen 4, 4b, deren Faserstränge 6, 6b zur zweiten Umlenkeinheit 7b führen, die zweiten Spulen 5, 5b angeordnet.

Hier ist an jeder Seite 11, 11a, 11b, 11c, 11d des Endeffektors 2 ein Tragelement 12 vorgesehen, das die auf dieser Seite 11, 11a, 11b, 11c, 11d angeordneten Spulen 5 trägt. Um Gewicht zu sparen, können Ausnehmungen in den Tragelementen 12 vorgesehen sein.

Die Seiten 11, 11a, 11b, 11c, 11d des Endeffektors 2 bilden hier und vorzugsweise im Schnitt quer, insbesondere orthogonal, zur Längsachse L des Endeffektors 2, ein Vieleck. Hier und vorzugsweise ist das Vieleck ein Viereck, insbesondere ein Quadrat. Alternativ kann das Viereck jedoch auch eine Raute und/oder ein Rechteck sein.

Der Eckbereich 8a des Endeffektors 2, von dem die von der ersten Umlenkeinheit 7a zusammengeführten Faserstränge 6 in den Mittenbereich 8 des Endeffektors 2 geführt werden, liegt hier und vorzugsweise im Bereich der Schnittkanten 13 von Ebenen E₁, E₂, welche entlang der ersten und der zweiten Seite 11a, 11b verlaufen. Der Eckbereich 8b des Endeffektors 2, von dem die von der zweiten Umlenkeinheit 7b zusammengeführten Faserstränge 6 in den Mittenbereich 9 des Endeffektors 2 geführt werden, liegt hier und vorzugsweise im Bereich der Schnittkanten von Ebenen E₃, E₄, welche entlang der dritten und der vierten Seite 11c, 11d des Endeffektors 2 erstrecken.

Zudem weist der Endeffektor 2 zwei sich gegenüberliegende Eckbereiche 8c, 8d auf, welche umlenkeinheiten-frei ausgebildet sind. Ferner sind vorzugsweise alle Eckbereiche 8 des Endeffektors 2 spulenfrei ausgebildet.

Begrenzt werden die Eckbereiche 8a, 8b nach endeffektorinnen durch eine Verbindungslinie V der nach endeffektorinnen liegenden axialen Enden der Spulen 5, welche am dichtesten an der ersten bzw. zweiten Umlenkeinheit 7a, 7b liegen. Nach endeffektoraußen werden die Eckbereiche 8a, 8b vorzugsweise begrenzt durch eine Ebene, welche orthogonal zu der Rotationsachse R_{S1} der am dichtesten an der ersten bzw. zweiten Umlenkeinheit 7a, 7b liegenden ersten Spule 5a ausgerichtet ist und die das axiale Ende dieser Spule 5a schneidet, und eine Ebene, welche orthogonal zu der Rotationsachse R_{S2} der am dichtesten an der ersten bzw. zweiten Umlenkeinheit 7a, 7b liegenden zweiten Spule 5b ausgerichtet ist und die das axiale Ende dieser Spule 5b schneidet, vgl. Figuren 3 und 4.

Der Mittenbereich 9 erstreckt sich hier und vorzugsweise durch den Endeffektor 2 entlang der Längsachse L des Endeffektors 2 bis zur Andruckrolle 10, wobei die Breite in radialer Richtung bezogen auf die Längsachse L durch die Spulen 5 begrenzt ist.

Wie der Fig. 3 ferner entnommen werden kann, weisen von den Spulenanordnungen 4a, deren Faserstränge 6 zur ersten Umlenkeinheit 7a führen, die ersten Spulen 5a parallel angeordnete Rotationsachsen R_{S1} auf. Auch von den Spulenanordnungen 4a, deren Faserstränge 6 zur ersten Umlenkeinheit 7a führen, weisen die zweiten Spulen 5b parallel angeordnete Rotationsachsen R_{S2} auf. Dies gilt hier und vorzugsweise ebenfalls für die Rotationsachsen R_{S1}, R_{S2} der ersten bzw. zweiten Spulen 5, 5a, 5b der Spulenanordnungen 4b, deren Faserstränge 6 zur zweiten Umlenkeinheit 7b führen, wie dies auch in der Fig. 3 gezeigt ist.

Von den Spulenanordnungen 4a, deren Faserstränge 6 zur ersten Umlenkeinheit 7a führen, liegen die axialen Enden der ersten Spulen 5a jeweils hier und vorzugsweise in einer Ebene. Ferner können von den Spulenanordnungen 4a, deren Faserstränge 6 zur ersten Umlenkeinheit 7a führen, die axialen Enden der zweiten Spulen 5b jeweils in einer Ebene liegen. Dies gilt analog hier und vorzugsweise auch jeweils für die ersten bzw. zweiten Spulen 5 der Spulenanordnungen 4b, deren Faserstränge 6 zur zweiten Umlenkeinheit 7b führen.

Ferner werden hier von der ersten Umlenkeinheit 7a und der zweiten Umlenkeinheit 7b jeweils die gleiche Anzahl Faserstränge 6 von der gleichen Anzahl Spulenanordnungen 5 umgelenkt.

Ferner sind die Spulen 5 im Ausführungsbeispiel spiegelsymmetrisch zu einer Ebene E_{S1} durch die erste und die zweite Umlenkeinheit 7a, 7b und parallel zu einer Rotationsachse Ru einer Umlenkrolle 21 der Umlenkeinheit 7 angeordnet. Zusätzlich oder alternativ können die Spulen 5 spiegelsymmetrisch zu einer Ebene E_{S2} durch die freien Eckbereiche 8, 8c, 8d des Endeffektors 2 und parallel zu einer Rotationsachse Rᵤ einer Umlenkrolle 21 der Umlenkeinheit 7 angeordnet sein, und/oder, die Spulen können spiegelsymmetrisch zu einer Ebene E_{S3} orthogonal zur Längsachse L des Endeffektors 2 angeordnet sein.

Die Spulen 5 einer Spuleneinheit 4 eines Systemtyps sind hier und vorzugsweise jeweils Bestandteil einer Spuleneinheit 14. Eine solche Spuleneinheit 14 ist in der Fig. 5 gezeigt. Der Systemtyp ist dann hier und vorzugsweise dadurch charakterisiert, dass die Spuleneinheit 14 eine Tänzerrolle 15 und/oder eine Umlenkrolle 16 aufweist. Hier und vorzugsweise sind die Rotationsachsen R_{S1}, R_{T}, Rsu der Spule 5 und/oder der Tänzerrolle 15 und/oder der Umlenkrolle 16 parallel zueinander angeordnet.

Im Ausführungsbeispiel und wie in der Fig. 5 exemplarisch für eine Spuleneinheit 14 gezeigt, werden die Faserstränge 6 der jeweiligen Spule 5 einer Spuleneinheit 14 von dieser Spule 4 zu der Tänzerrolle 15 und um die Umlenkrolle 16 geführt, bevor sie der ersten oder zweiten Umlenkeinheit 7, 7a, 7b zugeführt werden. Die Tänzerrolle 15 sorgt hier und vorzugsweise beim Abwickeln des Faserstrangs 6 von der Spule 5 für eine gleichbleibende Spannung des Faserstrangs 6. Hierzu ist die Tänzerrolle 15 vorzugsweise mittels einer Feder gegen den Faserstrang 6 federvorgespannt. Die Tänzerrolle 15 ist hier und vorzugsweise rotatorisch bewegbar. Zusätzlich oder alternativ kann diese jedoch auch linear bewegbar sein. Darüber hinaus ist die Tänzerrolle 15 schwerkraftkompensiert. Hierzu weist die Spuleneinheit 14, insbesondere ein die Tänzerrolle 15 tragender Schwenkarm 17 der Spuleneinheit 14, ein Gegengewicht 18 auf, welches auf die Tänzerrolle 15 infolge einer Bewegung des Endeffektors 2 durch den Manipulator 1 einwirkende Trägheitskräfte zumindest teilweise, vorzugsweise vollständig, kompensiert.

Ferner ist die Spulenanordnung 4 des Systemtyps dadurch definiert, dass die Spule 5 eine Bremse 20 aufweist. Diese kann eine Hysteresebremse und/oder eine pneumatische Bremse und/oder eine Wirbelstrombremse sein. Die Bremskraft der Bremse 20 ist vorzugsweise regelbar.

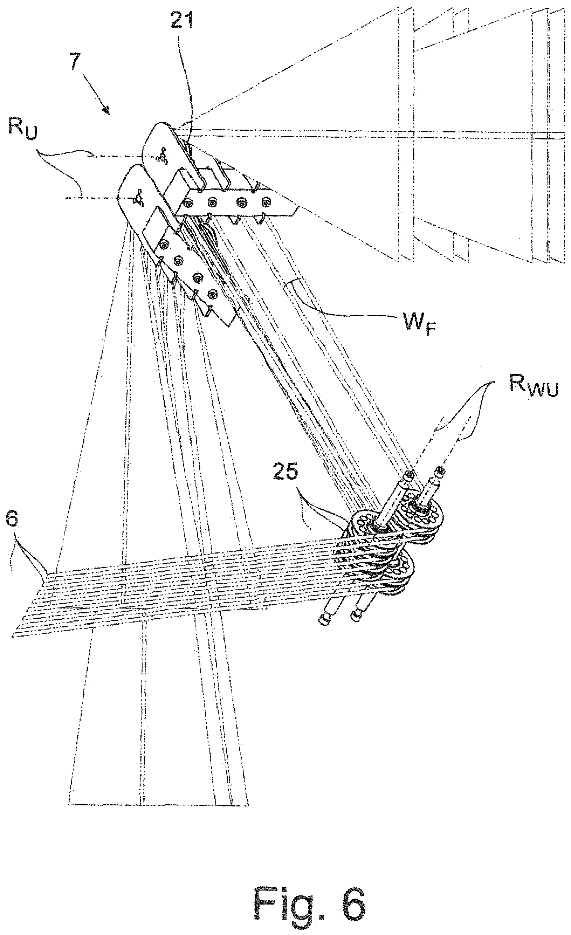

Der Systemtyp kann ferner dadurch definiert sein, dass die Faserstränge 6 der ersten und der zweiten Spule 5a, 5b von der Umlenkeinheit 7, 7a, 7b, vorzugsweise von der ersten bzw. zweiten Spule 5a, 5b, zur Andruckrolle 10 spiegelsymmetrisch geführt sind, wobei die Symmetrieebene E_{S} orthogonal zur Rotationsachse R_{A} der Andruckrolle 10 angeordnet ist. Diese spiegelsymmetrische Führung der Faserstränge 6 ist in der Darstellung der Faserstrangverläufe von den Spulen 5 in Richtung der Andruckrolle in der Fig. 6 gezeigt.

Die erste und/oder die zweite Umlenkeinheit 7a, 7b weisen hier, insbesondere für jeden der zugeführten Faserstränge 6, eine Umlenkrolle 21 auf. Hierdurch kann eine besonders sichere Führung der Faserstränge 6 erreicht werden. Die Umlenkrollen 21 können insbesondere auch Führungsränder 22 für die einzelnen Faserstränge 6 aufweisen.

Wie der Fig. 2 entnommen werden kann, sind die Rotationsachsen Ru der Umlenkrollen 21 der ersten und/oder zweiten Umlenkeinheit 7a, 7b hier und vorzugsweise jeweils orthogonal zu den Rotationsachsen R_{S1}, R_{S2} der Spulen 5 und/oder zu der Rotationsachse R_{A} der Andruckrolle 10 angeordnet. Auch dies ermöglicht in Kombination mit der Zusammenführung im Eckbereich 8, 8a, 8b des Endeffektors 2 einen kompakten Aufbau desselben. Ferner können zusätzlich oder alternativ die Umlenkrollen 21 der ersten und/oder der zweiten Umlenkeinheit 7a, 7b V-förmig angeordnet sein. Hierzu sind die Rotationsachsen R_{U} der einzelnen Umlenkrollen 21 parallel versetzt zueinander angeordnet.

Die Faserstränge 6 werden von der ersten bzw. der zweiten Umlenkeinheit 7a. 7b in den Mittenbereich 9 des Endeffektors 2 im Wesentlichen parallel geführt. Unter einer im Wesentlichen parallelen Führung ist hier und vorzugsweise ein Winkel W_{F} zwischen den Verlaufsachsen ihrer Faserstränge 6 von maximal 5°, vorzugsweise maximal 3°, weiter vorzugsweise maximal 1°, zu verstehen. Im Mittenbereich 9 ist vorzugsweise mindestens eine weitere Umlenkeinheit 23, hier sind zwei weitere Umlenkeinheiten 23a, 23b, zum Umlenken der Faserstränge 6 zur Andruckrolle 10 vorgesehen. Die Faserstränge 6 von der ersten Umlenkeinheit 7a werden nach dem Führen in den Mittenbereich 9 des Endeffektors 2 von einer ersten weiteren Umlenkeinheit 23a umgelenkt und der Andruckrolle 10, insbesondere ohne weitere Umlenkung, zugeführt. Die Faserstränge 6 von der zweiten Umlenkeinheit 7b werden ebenfalls nach dem Führen in den Mittenbereich 9 des Endeffektors 2 von einer zweiten weiteren Umlenkeinheit 23b umgelenkt und der Andruckrolle 10, insbesondere ohne weitere Umlenkung, zugeführt.

Die mindestens eine weitere Umlenkeinheit 23 bzw. die weiteren Umlenkeinheiten 23a, 23b weisen hier und vorzugsweise, wie in der Fig. 6 schematisch gezeigt, für jeden von ihr umgelenkten Faserstrang 6 eine eigene Umlenkrolle 24 auf. Auch diese Umlenkrollen 24 weisen hier und vorzugsweise einen Führungsrand 25 zum Führen des umgelenkten Faserstrangs 6 auf. Wie in der Fig. 6 ferner gezeigt ist, sind die Rotationsachsen Rwu einiger der Umlenkrollen 24 der ersten weiteren Umlenkeinheit 23a hier und vorzugsweise zueinander parallel versetzt. Im Ausführungsbeispiel sind die mittleren, hier die mittleren vier, Umlenkrollen 24 der ersten weiteren Umlenkeinheit 23a parallel in Richtung Andruckrolle 10 versetzt. Die zweite weitere Umlenkeinheit 23b ist vorzugsweise ebenso ausgebildet, wie vorstehend für die erste weitere Umlenkeinheit 23a beschrieben. Vorzugsweise sind die Umlenkrollen 24 der weiteren Umlenkeinheit 23 derart angeordnet, dass die von ihnen umgelenkten Faserstränge 6 parallel, insbesondere in einer Ebene, zur Andruckrolle 10 verlaufen. Vorzugsweise weisen die Verlaufsachsen der Faserstränge 6 zwischen der ersten weiteren Umlenkeinheit 23a bzw. der zweiten weiteren Umlenkeinheit 23b und der Andruckrolle 10 einen Winkel von weniger als 1° auf.

Die Faserstränge 6 von der ersten und die Faserstränge 6 von der zweiten Umlenkeinheit 7a, 7b werden, wie in den Fig. 2 und 4 schematisch gezeigt, der Andruckrolle 10 hier wechselweise nebeneinander zugeführt, so dass sie nebeneinander angeordnet von der Andruckrolle 10 als Band aus Fasersträngen 6 abgelegt werden können.

Zur Förderung der Faserstränge 6 zur Andruckrolle 10 weist der Endeffektor 2 mindestens eine Fördereinrichtung 26 auf. Vorzugsweise ist je mindestens eine, hier sind je zwei Fördereinheiten 26, zum Fördern der Faserstränge 6, welche von der ersten Umlenkeinheit 7a umgelenkt werden, bzw. zum Fördern der Faserstränge 6, welche von der zweiten Umlenkeinheit 7b umgelenkt werden, am Endeffektor 2 vorgesehen. Diese sind vorzugsweise vor und hinter einer Schneideinheit 27 angeordnet. Die Schneideinheit 27 dient bzw. die Schneideinheiten 27 dienen dem, insbesondere einzelnen, Ablängen der Faserstränge 6, vorzugsweise quer zur Verlaufsachse der Faserstränge 6.

Wie in der Fig. 2 ist bzw. sind hier und vorzugsweise die erste und/oder die zweite Umlenkeinheit 7, 7a, 7b derart angeordnet, dass die Faserstränge 6 von der jeweiligen Umlenkeinheit 7a, 7b in den Mittenbereich 9 durch einen Korridor verlaufen, welcher in Richtung parallel zur Längsachse L durch zwei zur Längsachse L orthogonale Ebenen begrenzt ist, die durch zwei einander zugewandte Spulenseiten zweier in Längsrichtung L benachbarter Spulen 5 verlaufen. Es werden hier die Faserstränge 6 zu der ersten bzw. der zweiten Umlenkeinheit 7a, 7b zwischen den in Längsrichtung L benachbarten Spulen 5 hindurchgeführt. Von der ersten bzw. der zweiten Umlenkeinheit 7a, 7b folgen die Faserstränge 6 weiter dem Korridor in den Mittenbereich 9 des Endeffektors 2.

Schließlich soll noch darauf hingewiesen werden, dass der Manipulator 1 mit dem Endeffektor 2 und der Ablageform 3 in einer klimatisierten Einhausung aufgestellt sein kann. Hierdurch können beim Ablegen der Faserstränge 6 auf die Ablageform 3 konstante Umgebungsbedingungen sichergestellt werden.

## Patentansprüche

1. Endeffektor zum Ablegen von Fasern auf einer Ablageform (3), wobei der Endeffektor (2) mindestens eine Spulenanordnung (4, 4a, 4b) eines Systemtyps aufweist, wobei der Systemtyp dadurch definiert ist, dass die Spulenanordnung (4, 4a, 4b) eine erste Spule (5, 5a) zum Bereitstellen eines ersten Faserstranges (6, 6a) und eine zweite Spule (5, 5b) zum Bereitstellen eines zweiten Faserstranges (6, 6b) aufweist, wobei die Rotationsachsen (R_{S1}, R_{S2}) der ersten und der zweiten Spule (5, 5a, 5b) winkelig zueinander angeordnet sind, wobei der erste Faserstrang (6, 6a) und der zweite Faserstrang (6, 6b) über eine Umlenkeinheit (7, 7a, 7b) zusammengeführt und von einem Eckbereich (8, 8a, 8b) des Endeffektors (2) gemeinsam in einen Mittenbereich (9) des Endeffektors (2) und weiter zu einer Andruckrolle (10) geführt werden, wobei der Eckbereich nach endeffektorinnen begrenzt wird durch eine Verbindungslinie (V) der nach endeffektorinnen liegenden axialen Enden der Spulen (5), welche am dichtesten an der Umlenkeinheit (7, 7a, 7b) liegen.

2. Endeffektor nach Anspruch 1, **dadurch gekennzeichnet, dass** der Endeffektor (2) eine erste Spulenanordnung (4, 4a) des Systemtyps und eine zweite Spulenanordnung (4, 4b) des Systemtyps aufweist, vorzugsweise, dass die Faserstränge (6, 6a) von der ersten Spulenanordnung (4, 4a) über eine erste Umlenkeinheit (7, 7a) zusammengeführt und von einem ersten Eckbereich (8, 8a) des Endeffektors (2) gemeinsam in den Mittenbereich (9) des Endeffektors (2) und weiter zu der Andruckrolle (10) geführt werden und dass die Faserstränge (6, 6b) von der zweiten Spulenanordnung (4, 4b) über eine zweite, insbesondere der ersten Umlenkeinheit (7, 7a) gegenüberliegende, Umlenkeinheit (7, 7b) zusammengeführt und von einem zweiten, insbesondere dem ersten Eckbereich (8, 8a) gegenüberliegenden, Eckbereich (8, 8b) des Endeffektors (2) gemeinsam in den Mittenbereich (9) des Endeffektors (2) und weiter zu der Andruckrolle (10) geführt werden.

3. Endeffektor nach Anspruch 1 oder 2, **dadurch gekennzeichnet, dass** der Endeffektor (2) sich entlang einer Längsachse (L) erstreckt, vorzugsweise, dass eine den ersten Eckbereich (8, 8a) und den zweiten Eckbereich (8, 8b) verbindende Diagonale (D) eine parallel zur Längsachse (L) gerichtete Projektion der Andruckrolle (10) schneidet, weiter vorzugsweise, dass die Rotationsachse (R_{A}) der Andruckrolle (10) orthogonal zu der den ersten und den zweiten Eckbereich (7, 7a, 7b) verbindenden Diagonalen (D) angeordnet ist.

4. Endeffektor nach einem der vorhergehenden Ansprüche, **dadurch gekennzeichnet, dass** die Rotationsachse (R_{A}) der Andruckrolle (10) in einem Winkel ungleich 0° und/oder in einem Winkel ungleich 90° zu den Rotationsachsen (R_{S1}, R_{S2}) der Spulen (5) angeordnet ist.

5. Endeffektor nach einem der vorhergehenden Ansprüche, **dadurch gekennzeichnet, dass** der Endeffektor (2) eine oder mehrere weitere Spulenanordnungen (4) des Systemtyps aufweist, deren Faserstränge (6) jeweils über die erste Umlenkeinheit (7, 7a) oder die zweite Umlenkeinheit (7, 7b) in den Mittenbereich (9) des Endeffektors (2) geführt werden, vorzugsweise, dass der Endeffektor mindestens 4, vorzugsweise mindestens 6, weiter vorzugsweise mindestens 8, weiter vorzugsweise mindestens 12, weiter vorzugsweise mindestens 16, Spulenanordnungen (4) des Systemtyps aufweist.

6. Endeffektor nach einem der vorhergehenden Ansprüche, **dadurch gekennzeichnet, dass** der Endeffektor (2) mindestens zwei, insbesondere mindestens vier, Seiten (11) aufweist, an denen die Spulen (5) der Spulenanordnungen (4) angeordnet sind,
wobei an einer ersten Seite (11, 11a) von den Spulenanordnungen (4a), deren Faserstränge (6) zur ersten Umlenkeinheit (7a) führen, die ersten Spulen (5a) angeordnet sind,
wobei an der zweiten Seite (11, 11b) von den Spulenanordnungen (4a), deren Faserstränge (6) zur ersten Umlenkeinheit (7a) führen, die zweiten Spulen (5b) angeordnet sind.

7. Endeffektor nach Anspruch 6, **dadurch gekennzeichnet, dass** die Seiten (11, 11a, 11b, 11c, 11d) des Endeffektors (2) im Schnitt quer, insbesondere orthogonal zur Längsachse (L) des Endeffektors (2), im Querschnitt ein Vieleck bilden, vorzugsweise, dass das Vieleck ein Viereck, insbesondere ein Quadrat und/oder eine Raute und/oder ein Rechteck ist.

8. Endeffektor nach einem der vorhergehenden Ansprüche, **dadurch gekennzeichnet, dass** die Spulen (5) spiegelsymmetrisch zu einer Ebene durch die freien Eckbereiche (8c, 8d) des Endeffektors (2) und parallel zu einer Rotationsachse (Ru) einer Umlenkrolle (2) der Umlenkeinheit (7) angeordnet sind, und/oder,
dass die Spulen (5) spiegelsymmetrisch zu einer Ebene orthogonal zur Längsachse (L) des Endeffektors (2) angeordnet sind.

9. Endeffektor nach einem der vorhergehenden Ansprüche, **dadurch gekennzeichnet, dass** der Systemtyp ferner dadurch definiert ist, dass die Spulen des Systemtyps jeweils Bestandteil einer Spuleneinheit (14) sind und dass die Spuleneinheit (14) eine Tänzerrolle (15) und/oder eine Umlenkrolle (16) aufweist, vorzugsweise, dass die Faserstränge (6) der jeweiligen Spule (5) einer Spuleneinheit (14) von dieser Spule (5) zu der Tänzerrolle (15) und um die Umlenkrolle (16) geführt werden, bevor sie der ersten oder zweiten Umlenkeinheit (7, 7a, 7b) zugeführt werden.

10. Endeffektor nach einem der vorhergehenden Ansprüche, **dadurch gekennzeichnet, dass** der Systemtyp ferner dadurch definiert ist, dass die Faserstränge (6) der ersten und der zweiten Spule (5, 5a, 5b) von der Umlenkeinheit (7, 7a, 7b), vorzugsweise von der ersten bzw. zweiten Spule (5, 5a, 5b), zur Andruckrolle (10) spiegelsymmetrisch geführt sind wobei die Symmetrieebene (Es) orthogonal zur Rotationsachse (R_{A}) der Andruckrolle (10) angeordnet ist.

11. Endeffektor nach einem der vorhergehenden Ansprüche, **dadurch gekennzeichnet, dass** die erste und/oder zweite Umlenkeinheit (7, 7a, 7b) für die ihr zugeführten Faserstränge (6), insbesondere jeweils, eine Umlenkrolle (2) aufweist, vorzugsweise, dass die Rotationsachsen (Ru) der Umlenkrollen der ersten und/oder zweiten Umlenkeinheit (7, 7a, 7b) jeweils orthogonal zu den Rotationsachsen (R_{S1}, R_{S2}) der Spulen und/oder der Andruckrolle (R_{A}) angeordnet sind.

12. Endeffektor nach einem der vorhergehenden Ansprüche, **dadurch gekennzeichnet, dass** die Umlenkrollen (2) der ersten und/oder zweiten Umlenkeinheit (7, 7a, 7b) V-förmig angeordnet sind, und/oder, dass die Rotationsachsen (Rₙ) der Umlenkrollen (21) radial versetzt zueinander angeordnet sind.

13. Endeffektor nach einem der vorhergehenden Ansprüche, **dadurch gekennzeichnet, dass** die Faserstränge (6) von der ersten Umlenkeinheit (7a) oder die Faserstränge (6) von der zweiten Umlenkeinheit (7b) nach dem Führen in den Mittenbereich (9) des Endeffektors (2) von einer weiteren Umlenkeinheit (23), vorzugsweise jeweils von einer weiteren Umlenkeinheit (23a, 23b) umgelenkt und der Andruckrolle (10), insbesondere ohne weitere Umlenkung, zugeführt werden.

14. Endeffektor nach einem der vorhergehenden Ansprüche, **dadurch gekennzeichnet, dass** die Faserstränge (6) von der ersten Umlenkeinheit (7a) und die Faserstränge (6) von der zweiten Umlenkeinheit (7b) der Andruckrolle (10) wechselweise nebeneinander zugeführt werden, vorzugsweise dass sie nebeneinander angeordnet von der Andruckrolle (10) als Band aus Fasersträngen (6) abgelegt werden.

15. Endeffektor nach einem der vorhergehenden Ansprüche, **dadurch gekennzeichnet, dass** die erste und/oder die zweite Umlenkeinheit (7, 7a, 7b) derart angeordnet sind, dass die Faserstränge (6) von der jeweiligen Umlenkeinheit (7a, 7b) in den Mittenbereich (9) durch einen Korridor verlaufen, welcher in Richtung parallel zur Längsachse (L) durch zwei zur Längsachse (L) orthogonale Ebenen begrenzt ist, die durch zwei einander zugewandte Spulenseiten zweier in Längsrichtung (L) benachbarter Spulen (5) verlaufen.

16. Manipulator mit einem Endeffektor (2) nach einem der vorhergehenden Ansprüche.

## Claims

1. End effector for depositing fibres on a storage mould (3), wherein the end effector (2) has at least one package arrangement (4, 4a, 4b) of a system type, wherein the system type is defined in that the package arrangement (4, 4a, 4b) has a first package (5, 5a) for providing a first fibre strand (6, 6a) and a second package (5, 5b) for providing a second fibre strand (6, 6b), wherein the rotation axes (R_{S1}, R_{S2}) of the first and the second package (5, 5a, 5b) are arranged at an angle relative to one another,
wherein the first fibre strand (6, 6a) and the second fibre strand (6, 6b) are merged by way of deflection unit (7, 7a, 7b) and conjointly guided by a corner region (8, 8a, 8b) of the end effector (2) into a centre region (9) of the end effector (2) and onwards to a contact pressure roller (10), wherein the corner region is delimited towards the inside of the end effector by a connecting line (V) of the axial ends of the packages (5) which lie on the inside of the end effector and are closest to the deflection unit (7, 7a, 7b).

2. End effector according to Claim 1, **characterized in that** the end effector (2) has a first package arrangement (4, 4a) of the system type and a second package arrangement (4, 4b) of the system type, preferably that the fibre strands (6, 6a) from the first package arrangement (4, 4a) are merged by way of a first deflection unit (7, 7a) and conjointly guided by a first corner region (8, 8a) of the end effector (2) into the centre region (9) of the end effector (2) and onwards to the contact pressure roller (10), and that the fibre strands (6, 6b) from the second package arrangement (4, 4b) are merged by way of a second deflection unit (7, 7b), in particular lying opposite the first deflection unit (7, 7a), and conjointly guided by a second corner region (8, 8b), in particular lying opposite the first corner region (8, 8a), of the end effector (2) into the centre region (9) of the end effector (2) and onwards to the contact pressure roller (10).

3. End effector according to Claim 1 or 2, **characterized in that** the end effector (2) extends along a longitudinal axis (L), preferably that a diagonal (D) connecting the first corner region (8, 8a) and the second corner region (8, 8b) intersects a projection of the contact pressure roller (10) oriented parallel to the longitudinal axis (L), furthermore preferably, that the rotation axis (R_{A}) of the contact pressure roller (10) is orthogonal to the diagonal (D) connecting the first and the second corner region (7, 7a, 7b).

4. End effector according to one of the preceding claims, **characterized in that** the rotation axis (R_{A}) of the contact pressure roller (10) is arranged at an angle unequal to 0° and/or at an angle unequal to 90° relative to the rotation axes (R_{S1}, R_{S2}) of the packages (5).

5. End effector according to one of the preceding claims, **characterized in that** the end effector (2) has one or a plurality of further package arrangements (4) of the system type, the fibre strands (6) of which are guided in each case by way of the first deflection unit (7, 7a) or the second deflection unit (7, 7b) into the centre region (9) of the end effector (2), preferably, that the end effector has at least 4, preferably at least 6, furthermore preferably at least 8, furthermore preferably at least 12, furthermore preferably at least 16, package arrangements (4) of the system type.

6. End effector according to one of the preceding claims, **characterized in that** the end effector (2) has at least two, in particular at least four, sides (11) on which the packages (5) of the package arrangements (4) are arranged,
wherein on a first side (11, 11a) of the package arrangements (4a) of which the fibre strands (6) lead to the first deflection unit (7a), the first packages (5a) are arranged,
wherein on the second side (11, 11b) of the package arrangements (4a) of which the fibre strands (6) lead to the first deflection unit (7a), the second packages (5b) are arranged.

7. End effector according to Claim 6, **characterized in that** the sides (11, 11a, 11b, 11c, 11d) of the end effector (2), in the cross section transverse, in particular orthogonal, to the longitudinal axis (L) of the end effector (2), when viewed in the cross section form a polygon, preferably that the polygon is a quadrangle, in particular a square and/or a rhombus and/or a rectangle.

8. End effector according to one of the preceding claims, **characterized in that** the packages (5) are arranged mirror-symmetrically to a plane through the free corner regions (8c, 8d) of the end effector (2) and parallel to a rotation axis (R_{U}) of a deflection roller (2) of the deflection unit (7),
and/or,
**in that** the packages (5) are arranged mirror-symmetrically to a plane orthogonal to the longitudinal axis (L) of the end effector (2).

9. End effector according to one of the preceding claims, **characterized in that** the system type is furthermore defined **in that** the packages of the system type are in each case a constituent part of a package unit (14), and that the package unit (14) has a dancer roller (15) and/or a deflection roller (16), preferably, that the fibre strands (6) of the respective package (5) of a package unit (14) are guided from this package (5) to the dancer roller (15) and about the deflection roller (16) before they are fed to the first or the second deflection unit (7, 7a, 7b).

10. End effector according to one of the preceding claims, **characterized in that** the system type is furthermore defined **in that** the fibre strands (6) of the first and the second package (5, 5a, 5b) are guided mirror-symmetrically from the deflection unit (7, 7a, 7b), preferably from the first or the second package (5, 5a, 5b), to the contact pressure roller (10), wherein the symmetry plane (E_{S}) is arranged orthogonally to the rotation axis (R_{A}) of the contact pressure roller (10).

11. End effector according to one of the preceding claims, **characterized in that** the first and/or the second deflection unit (7, 7a, 7b) for the fibre strands (6) supplied thereto have, in particular in each case, a deflection roller (2), preferably, that the rotation axes (R_{U}) of the deflection rollers of the first and/or the second deflection unit (7, 7a, 7b) are arranged orthogonally to the rotation axes (R_{S1}, R_{S2}) of the packages and/or of the contact pressure roller (R_{A}).

12. End effector according to one of the preceding claims, **characterized in that** the deflection rollers (2) of the first and/or the second deflection unit (7, 7a, 7b) are arranged so as to be V-shaped, and/or **in that** the rotation axes (Rₙ) of the deflection rollers (21) are arranged so as to be radially offset to one another.

13. End effector according to one of the preceding claims, **characterized in that** the fibre strands (6) from the first deflection unit (7a) or the fibre strands (6) from the second deflection unit (7b), after guiding into the centre region (9) of the end effector (2), are deflected by a further deflection unit (23), preferably in each case by a further deflection unit (23a, 23b), and fed to the contact pressure roller (10), in particular without further deflection.

14. End effector according to one of the preceding claims, **characterized in that** the fibre strands (6) from the first deflection unit (7a) and the fibre strands (6) from the second deflection unit (7b) of the contact pressure roller (10) are alternately fed side by side, preferably that they are deposited by the contact pressure roller (10) so as to be arranged side by side as a sliver of fibre strands (6).

15. End effector according to one of the preceding claims, **characterized in that** the first and/or the second deflection unit (7, 7a, 7b) are/is arranged in such a manner that the fibre strands (6) run from the respective deflection unit (7a, 7b) into the centre region (9) through a corridor which is delimited in the direction parallel to the longitudinal axis (L) by two planes orthogonal to the longitudinal axis (L), which planes extend through two mutually facing package sides of two packages (5) adjacent in the longitudinal direction (L).

16. Manipulator having an end effector (2) according one of the preceding claims.

## Revendications

1. Effecteur terminal pour déposer des fibres sur un moule de dépôt (3), l'effecteur terminal (2) comportant au moins un ensemble de bobines (4, 4a, 4b) d'un type de système, le type de système étant défini en ce que l'ensemble de bobines (4, 4a, 4b) comporte une première bobine (5, 5a) pour fournir un premier brin de fibres (6, 6a) et une deuxième bobine (5, 5b) pour fournir un deuxième brin de fibres (6, 6b), les axes de rotation (R_{S1}, R_{S2}) de la première et de la deuxième bobine (5, 5a, 5b) étant disposés en formant un angle l'un par rapport à l'autre,
le premier brin de fibres (6, 6a) et le deuxième brin de fibres (6, 6b) étant réunis par une unité de renvoi (7, 7a, 7b) et étant guidés ensemble d'une zone de coin (8, 8a, 8b) de l'effecteur terminal (2) dans une zone centrale (9) de l'effecteur terminal (2) et ensuite vers un rouleau presseur (10), la zone de coin étant délimitée vers l'intérieur de l'effecteur terminal par une ligne de liaison (V) des extrémités axiales des bobines (5) situées vers l'intérieur de l'effecteur terminal, lesquelles se trouvent le plus près de l'unité de renvoi (7, 7a, 7b).

2. Effecteur terminal selon la revendication 1, **caractérisé en ce que** l'effecteur terminal (2) comporte un premier ensemble de bobines (4, 4a) du type de système et un deuxième ensemble de bobines (4, 4b) du type de système, de préférence que les brins de fibres (6, 6a) du premier ensemble de bobines (4, 4a) sont réunis par une première unité de renvoi (7, 7a) et sont guidés ensemble d'une première zone de coin (8, 8a) de l'effecteur terminal (2) dans la zone centrale (9) de l'effecteur terminal (2) et ensuite jusqu'au rouleau presseur (10), et que les brins de fibres (6, 6b) du deuxième ensemble de bobines (4, 4b) sont réunis par une deuxième unité de renvoi (7, 7b), faisant face en particulier à la première unité de renvoi(7, 7a) et sont guidés ensemble d'une deuxième zone de coin (8, 8b), faisant face en particulier à la première zone de coin (8, 8a), de l'effecteur terminal (2) dans la zone centrale (9) de l'effecteur terminal (2) et ensuite jusqu'au rouleau presseur (10).

3. Effecteur terminal selon la revendication 1 ou 2, **caractérisé en ce que** l'effecteur terminal (2) s'étend le long d'un axe longitudinal (L), de préférence qu'une diagonale (D) reliant la première zone de coin (8, 8a) et la deuxième zone de coin (8, 8b) coupe une projection du rouleau presseur (10) dirigée parallèlement à l'axe longitudinal (L), par ailleurs de préférence que l'axe de rotation (R_{A}) du rouleau presseur (10) est disposé orthogonalement par rapport à la diagonale (D) reliant la première et la deuxième zone de coin (7, 7a, 7b).

4. Effecteur terminal selon l'une des revendications précédentes, **caractérisé en ce que** l'axe de rotation (R_{A}) du rouleau presseur (10) est disposé selon un angle différent de 0° et/ou selon un angle différent de 90° par rapport aux axes de rotation (R_{S1}, R_{S2}) des bobines (5).

5. Effecteur terminal selon l'une des revendications précédentes, **caractérisé en ce que** l'effecteur terminal (2) comporte un ou plusieurs autres ensembles de bobines (4) du type de système, dont les brins de fibres (6) sont guidés dans la zone centrale (9) de l'effecteur terminal (2) respectivement par la première unité de renvoi (7, 7a) ou la deuxième unité de renvoi (7, 7b), de préférence que l'effecteur terminal comporte au moins 4, de préférence au moins 6, par ailleurs de préférence au moins 8, par ailleurs de préférence au moins 12, par ailleurs de préférence au moins 16, ensembles de bobines (4) du type de système.

6. Effecteur terminal selon l'une des revendications précédentes, **caractérisé en ce que** l'effecteur terminal (2) comporte au moins deux, en particulier au moins quatre côtés (11) sur lesquels sont disposées les bobines (5) des ensembles de bobines (4),
les premières bobines (5a) étant disposées sur un premier côté (11, 11a) des ensembles de bobines (4a) dont les brins de fibres (6) mènent à la première unité de renvoi (7a),
les deuxièmes bobines (5b) étant disposées sur le deuxième côté (11, 11b) des ensembles de bobines (4a), dont les brins de fibres (6) mènent à la première unité de renvoi (7a).

7. Effecteur terminal selon la revendication 6, **caractérisé en ce que** les côtés (11, 11a, 11b, 11c, 11d) de l'effecteur terminal (2) forment un polygone en coupe transversalement, en particulier orthogonalement à l'axe longitudinal (L) de l'effecteur terminal (2), de préférence que le polygone est un rectangle, en particulier un carré et/ou un losange et/ou un rectangle.

8. Effecteur terminal selon l'une des revendications précédentes, **caractérisé en ce que** les bobines (5) sont disposées en symétrie de miroir par rapport à un plan passant par les zones de coin libres (8c, 8d) de l'effecteur terminal (2) et parallèlement à un axe de rotation (R_{U}) d'un rouleau de renvoi (2) de l'unité de renvoi (7),
et/ou,
**que** les bobines (5) sont disposées en symétrie en miroir par rapport à un plan orthogonalement à l'axe longitudinal (L) de l'effecteur terminal (2).

9. Effecteur terminal selon l'une des revendications précédentes, **caractérisé en ce que** le type de système est en outre défini **en ce que** les bobines du type de système font partie intégrante chacune d'une unité de bobine (14) et que l'unité de bobine (14) comporte de préférence un rouleau danseur (15) et/ou un rouleau de renvoi (16), de préférence les brins de fibres (6) de la bobine (5) respective d'une unité de bobine (14) sont guidés depuis ladite bobine (5) vers le rouleau danseur (15) et autour du rouleau de renvoi (16) avant d'être amenés vers la première ou la deuxième unité de renvoi (7, 7a, 7b).

10. Effecteur terminal selon l'une des revendications précédentes, **caractérisé en ce que** le type de système est en outre défini **en ce que** les brins de fibres (6) de la première et la deuxième bobine (5, 5a, 5b) sont guidés par l'unité de renvoi (7, 7a, 7b), de préférence par la première et la deuxième bobine (5, 5a, 5b) en symétrie de miroir vers le rouleau presseur (10), le plan de symétrie (E_{S}) étant disposé orthogonalement par rapport à l'axe de rotation (R_{A}) du rouleau presseur (10).

11. Effecteur terminal selon l'une des revendications précédentes, **caractérisé en ce que** la première et/ou la deuxième unité de renvoi (7, 7a, 7b) comportent, en particulier chacune, un rouleau de renvoi (2) pour les brins de fibres (6) qui lui sont amenés, de préférence que les axes de rotation (R_{U}) des rouleaux de renvoi de la première et/ou de la deuxième unité de renvoi (7, 7a, 7b)sont disposés respectivement orthogonalement aux axes de rotation (R_{S1}, R_{S2}) des bobines et/ou du rouleau presseur (R_{A}).

12. Effecteur terminal selon l'une des revendications précédentes, **caractérisé en ce que** les rouleaux de renvoi (2) de la première et/ou de la deuxième unité de renvoi (7, 7a, 7b) sont disposés en forme de V et/ou que les axes de rotation (Rₙ) des rouleaux de renvoi (21) sont décalés radialement les uns par rapport aux autres.

13. Effecteur terminal selon l'une des revendications précédentes, **caractérisé en ce que** les brins de fibres (6) de la première unité de renvoi (7a) ou les brins de fibres (6) de la deuxième unité de renvoi (7b) sont renvoyés après avoir été guidés dans la zone centrale (9) de l'effecteur terminal (2) par une autre unité de renvoi (23), de préférence respectivement par une autre unité de renvoi (23a, 23b) et sont amenés au rouleau presseur (10), en particulier sans autre renvoi.

14. Effecteur terminal selon l'une des revendications précédentes, **caractérisé en ce que** les brins de fibres (6) sont amenés par la première unité de renvoi (7a) et les brins de fibres (6) sont amenés par la deuxième unité de renvoi (7b) au rouleau presseur (10) alternativement les uns à côté des autres, de préférence qu'ils sont déposés les uns à côté des autres par le rouleau presseur (10) sous la forme d'une bande de brins de fibres (6).

15. Effecteur terminal selon l'une des revendications précédentes, **caractérisé en ce que** la première et/ou la deuxième unité de renvoi (7, 7a, 7b) sont disposées de telle manière que les brins de fibres (6) s'étendent de l'unité de renvoi (7a, 7b) respective dans la zone centrale (9) à travers un couloir, qui est délimité dans la direction parallèlement à l'axe longitudinal (L) par deux plans orthogonaux à l'axe longitudinal (L), lesquels s'étendent à travers deux côtés de bobine tournés l'un vers l'autre de deux bobines (5) adjacentes dans la direction longitudinale (L).

16. Manipulateur avec un effecteur terminal (2) selon l'une des revendications précédentes.
